# EUROPÄISCHE PATENTANMELDUNG

(11) **EP 1 143 193 A2**
(43) Veröffentlichungstag der Anmeldung: **10.10.2001**
(21) Anmeldenummer: 01810337.4
(22) Anmeldetag: 03.04.2001
(51) Int. Cl.: F21S 8/00, F21V 7/00, F21V 21/088

(54) **Beleuchtungskörper**

(30) Priorität: 07.04.2000 CH 7002000
(71) Anmelder: Hansheinrich, Glättli, 8700 Küsnacht (CH)
(72) Erfinder: Hansheinrich, Glättli, 8700 Küsnacht (CH)
(74) Vertreter: Rentsch, Rudolf A.

(57) **Zusammenfassung**

Die Erfindung betrifft einen Beleuchtungskörper zur indirekten Beleuchtung eines Objektes (3) mit einer Lichtquelle (2) und einer Mehrzahl von Reflektoren (6, 7, 11, 18, 19, 21). Die Reflektoren (6,7,11,18,19,21) und die Lichtquelle (2) sind so zueinander angeordnet, dass die austretenden Lichtstrahlen (8, 9, 10, 11, 23) grösstenteils an einem oder mehreren der Reflektoren (6,7,11,18,19,21) reflektiert werden, bevor sie auf das Objekt (3) treffen.

## Beschreibung

Die vorliegende Erfindung betrifft einen Beleuchtungskörper gemäss dem Oberbegriff von Patentanspruch 1.

Aus dem Stand der Technik sind verschiedene Lichtquellen und Beleuchtungskörper, z.B. Tischlampen mit Leuchtstoffröhren, zum Ausleuchten von Objekten bekannt, die in der Regel mehrere der nachfolgend erwähnten Nachteile aufweisen. So beleuchten diese herkömmlichen Beleuchtungskörper die unmittelbar unter der Leuchte liegenden Fläche, anstelle des sich versetzt davor befindenden Bereiches und weisen zudem eine ungleichmässige Verteilung des Lichts auf der zu beleuchtenden Fläche auf. Hinzu kommt ein unerwünschter Schattenwurf, vor allem bei punktförmigen Lichtquellen, durch Hände und Werkzeuge auf die zu beleuchtende Stelle beim Schreiben, Zeichnen, Malen, Bearbeiten oder bei Montage-Arbeiten. Eine erhebliche Wärmeabgabe sowie das technische Konzept der bekannten Beleuchtungskörper macht diese für viele Einsätze ungeeignet, z.B. wenn wärmeempfindliche Gegenstände platzsparend beleuchtet werden sollen. Ein weiterer Nachteil besteht in einer oft uneleganten, schlecht montierbaren Konstruktion, die ein grosses Volumen einnimmt, die Sicht beeinträchtigt und zu Blendeffekten führt.

Der ungleichmässige Verlauf der Beleuchtungsstärke kann bei herkömmlichen Beleuchtungskörpern praktisch nur dadurch gemildert werden, dass man die Lampe möglichst senkrecht und eher hoch und zentriert über dem auszuleuchtenden Objekt anbringt. Dort nimmt sie dann einen Raum ein, den man lieber frei hätte, um z.B. grossformatige Hefte und Bücher ohne Behinderung umblättern zu können. Versucht man dieja ohnehin schon relativ hoch liegende Lampe so zu richten, dass die unmittelbar davor liegende Fläche ausgeleuchtetwird, nimmt die Gefahr zu, dass hierbei Licht direkt von der Lichtquelle ins Auge gelangt.

Bei bestimmten Anwendungen sind konstruktive Restriktionen für den Beleuchtungskörper zwingend vorgegeben. So ist beispielsweise bei Notenpulten an Flügeln oder bei Notenständern eine Ausleuchtung aus relativ hoher Position über dem zu beleuchtenden Objekt nicht möglich, da dann eine zu hohe Schwerpunktlage resultieren würde, die nicht nur ästhetisch unbefriedigend ist, sondern insbesondere bei zusammenlegbaren Notenständern zur Gefahr von Schwingungen oder sogar zum Umfallen infolge von Übergewicht führt. Die Beleuchtung der Notenblätter von oben führt überdies oft dazu, dass die Oberfläche, insbesondere von hochwertigem Papier, die Lichtquelle reflektiert, den Spieler blendet und auf dem entsprechenden Teil des Blattes eine starke Kontrastreduktion bewirkt. Ausserdem entsteht ungewolltes Fremdlicht, welches sich unkontrolliert im Raum ausbreitet und so zu unschönen und unerwünschten Lichtmustern in der Umgebung führt.

Es ist Aufgabe der Erfindung, einen Beleuchtungskörper zu schaffen, der eine weitgehend homogene Lichtstärke bewirkt und im wesentlichen frei bezüglich dem auszuleuchtenden Objekt angeordnet werden kann.

Diese Aufgabe wird durch die in den Patentansprüchen definierte Erfindung gelöst.

Die erfinderische Idee geht davon aus, einen Beleuchtungskörper so auszubilden, dass weitgehend frei von seiner Anordnung zum auszuleuchtenden Objekt bzw. bei vorgegebener Position, eine homogene Ausleuchtung, insbesondere von flächigen Objekten erreicht werden kann. So sollen also z.B. die Arbeitsfläche eines Montageplatzes, eines Schreib- oder Zeichentisches von der rückwärtigen Seite her beleuchtet werden, Noten auf einem Klavier von oben, d.h. von ausserhalb des Raumes, der zum Umblättern benötigt wird, und Noten auf dem Notenpult eines Flügels oder aufeinem Notenständervon unten. Insbesondere im Falle der letzten beiden Anwendungen soll sich die Leuchte (in Richtung auf den Spieler zu) nur in geringem Abstand von der zu beleuchtenden Fläche befinden. Auf keinen Fall soll aber das Licht der Leuchte ungewollt direkt ins Auge des Spielers, Zeichners, Arbeitenden etc. fallen können. Dies wird erreicht, indem eine Lichtquelle und mindestens zwei Reflektoren so zueinander angeordnet werden, dass ein wesentlicher Teil der austretenden Lichtstrahlen an mindestens einem der Reflektoren reflektiert wird, bevor sie auf das Objekt treffen.

Aufgrund der Anordnung und Ausdehnung der Lichtquelle gegenüber dem auszuleuchtenden Objekt legen die Lichtstrahlen ortsabhängig unterschiedliche lange Wege zurück. Aufgrund dieser Tatsache werden die Lichtstrahlen z.T. so beeinflusst, dass die Beleuchtungsstärke inhomogen wird. Ausserdem ist der Einfallswinkel der Lichtstrahlen auf das zu beleuchtende Objekt auch nicht konstant, was normalerweise ebenfalls zu einer ungleichmässigen Ausleuchtung führen würde. Diese Umstände werden durch die hier aufgezeigte Erfindung gezielt kompensiert, so dass eine homogene Beleuchtung des Objektes garantiert wird. Durch eine ortsabhängige Kompensation der oben erwähnten Effekte, insbesondere durch Ein- oder Mehrfachreflexion der Lichtstrahlen innerhalb der erfindungsgemässen Leuchte, werden die Lichtstrahlen so beeinflusst, dass der gewünschte Effekt mit minimalem Aufwand und kostengünstig erreicht wird. Die Reflexionen der Lichtstrahlen innerhalb der Leuchte sind so ausgelegt, dass gewisse Lichtstrahlen ortsabhängig stärker abgeschwächt werden als andere. Dies wird einerseits durch die Anzahl der Reflexionen und die Anordnung und Beschaffenheit der reflektierenden Flächen erzielt.

Die vorliegende Erfindung ermöglicht es so, dass der Beleuchtungskörper, insbesondere bei peripherer Anordnung zu einem flächigen Objekt, in vergleichsweise sehr geringer Distanz zu dessen Oberfläche angeordnet, und insbesondere bei Klavieren auf neuartige Weise befestigt werden kann, wobei dennoch eine homogene Beleuchtung erreicht wird.

Anhandvon Ausführungsbeispielen soll die Erfindung näher beschrieben werden. Es zeigen:
- Figur 1: einen Schnitt einer erfindungsgemässen Leuchte
- Figur 2: einen Schnitt einer erfindungsgemässen Leuchte mit einem zu beleuchtenden, flächigen Objekt
- Figur 3: einen Schnitt einer erfindungsgemässen Leuchte gemäss Figur 1 mit einem Stativ
- Figur 4: einen Schnittdurch eineweitere, relativbreite Ausführungsform der erfindungsgemässen Leuchte,
- Figur 5: einen Schnitt durch eine weitere Ausführungsform der erfindungsgemässen Leuchte mit Reflektor,
- Figur 6: eine perspektivische Ansicht einer erfindungsgemässen Leuchte,
- Figur 7: eine perspektivische Ansicht einer Leuchte gemäss Figur 1 mit Reflektoren,
- Figur 8: eine perspektivische Ansicht einer Leuchte gemäss Figur 4 mit zusätzlichen Reflektoren,
- Figur 9: Vergleich der Beleuchtungsstärken auf einem zu beleuchtenden Objekt,
- Figur 10: eine Befestigung eines Beleuchtungskörpers an einem Konzertflügel,
- Figur 11: eine weitere Ausführungsform einer Leuchte.

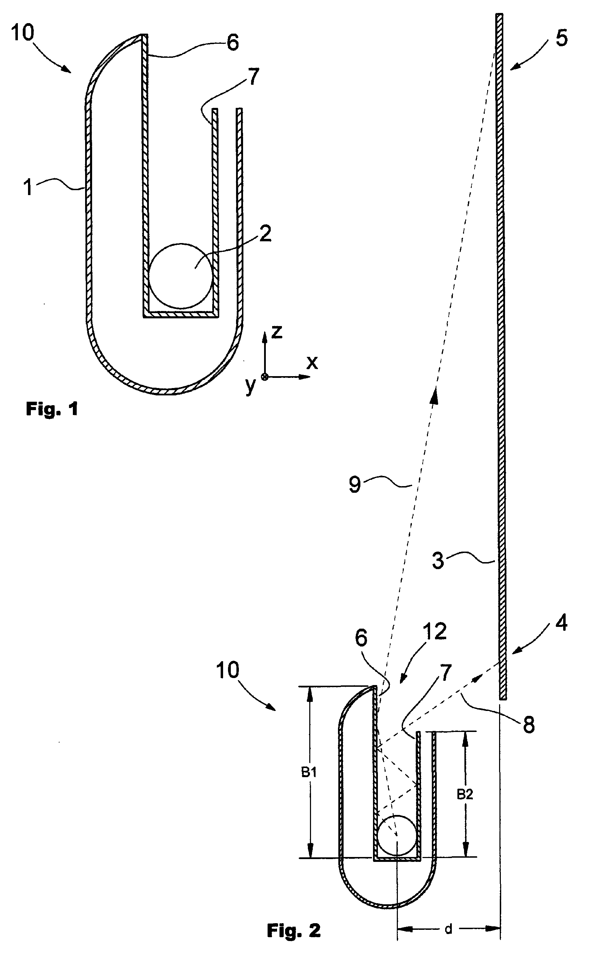

**Figur 1** zeigt einen Beleuchtungskörper 10 mit einem Gehäuse 1 und einer Lichtquelle 2, die nur in einer einzigen Richtung (hier in Richtung y) eine grössere Ausdehnung aufweist, z.B. eine Fluoreszenzröhre. Auf diese Weise wird eine langgestreckte Abstrahlcharakteristik erreicht. Zwei Reflektoren 6, 7 sind hier parallel und in einem Abstand zueinander so angeordnet, dass die Lichtquelle 2 dazwischen Platz findet. Das Gehäuse 1 umgibt die Reflektoren 6, 7 so dass diese und die Lichtquelle 2 gegen äussere Einflüsse geschützt sind. Das Gehäuse 1 dient u.a. der Kühlung und kann in seiner Form weitgehend frei gestaltetwerden, so dass verschiedenen Designwünschen Rechnung getragen werden kann. Der Fachmann erkennt ohne weiteres, dass die beiden Reflektoren miteinander verbunden sein können bzw. aus einem durchgehenden Reflektorelement gebildet werden können. Solche Lösungen sind selbstverständlich von der Erfindung mit umfasst, wenn hier im Sinne der funktionalen Bedeutung von "zwei Reflektoren" gesprochen wird.

**Figur 2** zeigt den Beleuchtungskörper 10 gemäss Figur 1 und ein flächiges Objekt 3, in einer seitlichen Schnittdarstellung. Der Beleuchtungskörper 10 ist in einem geringen Abstand d vor und unterhalb von dem, ebenfalls im Schnitt dargestellten, flächigen Objekt 3 (z.B. ein Manuskript- oder Noten-Blatt) angeordnet, welches durch den Beleuchtungskörper 10 möglichst gleichmässig ausgeleuchtet werden soll. Entsprechend dieser Anordnung ist ein unterer Bereich 4 des zu beleuchtenden Objekts 3 relativ nahe an der Lichtquelle, während ein oberer Bereich 5 bedeutend weiter von der Lichtquelle entfernt ist, wodurch das Licht hier in einem flacheren Winkel einfällt.

Erfindungsgemäss wird eine weitgehend homogene Ausleuchtung des Objekts 3 hier durch zwei Reflektoren 6 und 7 erreicht. Ein erster, von der Lichtquelle 2 ausgehender Lichtstrahl 8 erreicht den unteren Bereich 4 des Objekts 3 nur nach mehrfacher Reflexion an den beiden Reflektoren 6 und 7. Infolge der zusätzlich zurückgelegten Distanz und der unvermeidlichen Verluste bei jeder Reflexion verliert der Lichtstrahl 8 relativ viel von seiner Helligkeit, was eine entsprechend geringere Beleuchtungsstärke im unteren Bereich 4 der Fläche 3 nach sich zieht.

Im Gegensatz hierzu kann ein zweiter Lichtstrahl 9 aus der gleichen Lichtquelle 2 den oberen Bereich 5 des Objekts 3 direkt, oder nach einer, höchstens aber nach ganz wenigen Reflexionen und deshalb praktisch ungeschwächt erreichen. Durch die Anordnung und die geometrische Ausgestaltung der Reflektoren 6 und 7, sowie deren Materialbeschaffenheit und Beschichtung wird erreicht, dass das Objekt 3 optimal ausgeleuchtet wird.

In diesem Ausführungsbeispiel sind die beiden Reflektoren 6 und 7 im wesentlichen parallel und als ebene Flächen ausgestaltet und besitzen vorteilhafterweise eine unterschiedliche Breite B1 und B2. Auf diese Weise wird eine asymmetrische Verteilung des Lichtflusses in Bezug auf die (hier nicht dargestellte) Mittelebene zwischen den Reflektoren 6 und 7 erzeugt. Durch Wahl des Materials für die Reflektoren 6 und 7, deren relative Anordnung gegenüber der Lichtquelle, deren geometrischeAusgestaltung und Oberfläche, sowie deren entsprechende Dämpfung kann die Lichtverteilung zusätzlich beeinflusst, bzw. korrigiert werden. Es ist wesentlich, dass ein Mindestmass an Reflexionsverlusten (im übrigen abhängig vom Einfallswinkel des Lichts) bei mindestens einem der beiden Reflektoren erfindungsgemäss vorgesehen wird, da diese eine wichtige Rolle beim gleichmässigen Verteilen des Lichts übernehmen. Unterschiedliche Länge der Lichtwege zu den nahen und entfernteren Bereichen des zu beleuchtenden Objekts sowie variierende Einfallswinkel des Lichtes auf dem zu beleuchtenden Objekt genügen in der Regel nicht, um dessen homogene Ausleuchtung zu erreichen. Erfindungsgemäss wird entsprechend ein durchschnittlicher Reflexionskoeffizientzwischen etwa 0.2 und 0.8 vorgesehen. Wie aus Figur 2 guterkenntlich ist, wird eine günstige Anordnung für die bezweckten Reflektionseigenschaften durch eine im Vergleich zur Breite B1, B2 geringen gegenseitigen Abstand der Reflektoren erreicht. Auf diese Weise kann die erfindungsgemäss bezweckte, im wesentlichen homogene Lichtverteilung erreicht werden. Ein durch die Reflektoren 6 und 7 begrenzter Raum 12 kann zur Erzielung bestimmter Effekte ganz oder teilweise mit einem lichtleitenden Material (nicht näher dargestellt) ausgefüllt werden. Der Brechungsindex dieses Materials stellt einen weiteren nützlichen Parameter dar. Entsprechend wird bezweckt, dass nahe beim Beleuchtungskörper austretende Lichtstrahlen 8 durch die Reflektoren eine Mehrfachreflexion und vom Beleuchtungskörper entfernte Bereiche beleuchtende Lichtstrahlen 9 eine einfache Reflexion erfahren.

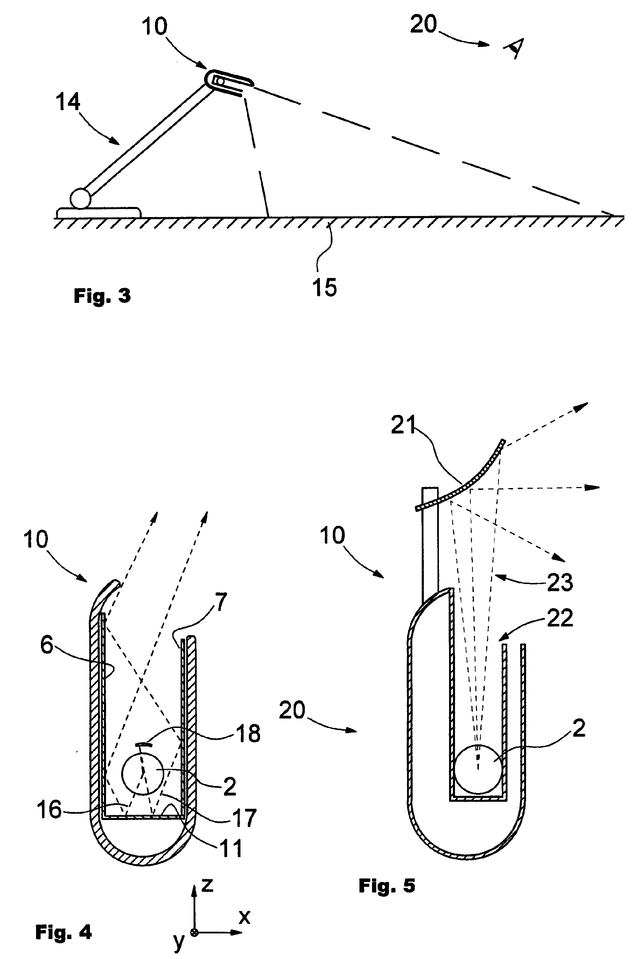

**Figur 3** zeigt das Ausführungsbeispiel gemäss Figur 1 mit einem Stativ 14 auf einer Fläche 15 stehend in einer Seitenansicht. Das Gehäuse 1 schütztdie Reflektoren 6,7 vor mechanischen Beschädigungen und verhindert gleichzeitig, dass gestreutes Licht an den seitlichen Enden von Lichtquelle und Reflektoren aus dem Inneren der Anordnung in das Auge 20 eines Benutzers (nicht näher dargestellt) fällt. Aus Darstellungsgründen sind die seitlichen Abdeckungen am Beleuchtungskörper 10 weggelassen. Es ist hier gut erkennbar, dass das ausgeleuchtete Objekt (vgl. Figur 1) nicht unter, sondern versetzt vor der Leuchte liegt.

**Figur 4** zeigtein Ausführungsbeispiel eines erfindungsgemässen Beleuchtungskörpers 10 in einer seitlichen Schnittdarstellung. Die Reflektoren 6 und 7 liegen bei dieser Ausführungsform weiter auseinander, als es der Durchmesser der Lichtquelle 2 erfordern würde. Auf diese Weise erhält man eine etwas höhere Lichtausbeute, da in diesem Fall auch Lichtstrahlen 16, die die Lichtquelle 2 in der hier gezeigten Darstellung in Richtung der negativen z-Achse verlassen, zu einem grossen Teile nach oben an einem weiteren Reflektor 11 so reflektiert werden, dass sie optimal auf das auszuleuchtende Objekt (nicht näher dargestellt) fallen. Im Inneren des Beleuchtungskörpers 10 befindet sich hier eine Blende 18, die so ausgestaltet ist, dass Lichtstrahlen 17, die die Lichtquelle 2 in Richtung der positiven z-Achse verlassen, den Beleuchtungskörper 10 nicht unkontrolliert verlassen, sondern absorbiert oder bei Ausbildung der Blende 18 als Reflektor so reflektiert werden, dass sie durch Reflexionen an den Reflektoren 6,7,11 ebenfalls zur Ausleuchtung des zu beleuchtenden Objekts (nicht näher dargestellt) beitragen. Bei Bedarf können auch weitere Blenden verwendet werden. Für den Fachmann ist es selbstverständlich, dass die beiden Reflektoren 6 und 7 nicht zwingend parallel angeordnet sein müssen. Durch gezielte Anordnung der Reflektoren 6, 7, 11, 18 kann das Abstrahlverhalten des Beleuchtungskörpers 10 bedarfsgerecht beeinflusst werden. Die Charakteristik des Beleuchtungskörpers 10 kann zusätzlich über die räumliche Ausgestaltung, insbesondere die Krümmung, der Reflektoren 6,7,11,18 bestimmt werden. Es ist selbstverständlich, dass diese neben der hier gezeigten besonders vorteilhaften Ausführungsform mit eben ausgebildeten Reflektoren 6,7,11, falls erforderlich, auch eine andere Gestaltung aufweisen können. Es sind auch Ausführungsformen möglich, bei denen die Reflektoren während des Betriebes des Beleuchtungskörpers 10 verstellt werden können.

Das Reflexionsverhalten der einzelnen Reflektoren 6,7,11,18 kann ganz oder bereichsweise auch einen Gradienten oder eine richtungsabhängige Streuung aufweisen, sodass die Lichtstrahlen abhängigvom Ort unterschiedlich beeinflusstwerden. Bei einigen Anwendungen empfiehlt es sich, mehrere Paare von im wesentlichen parallelen, mehr oder weniger reflektierender Flächen zu verwenden. Reflektierende Flächen quer zur Achse der Lichtquelle an den Enden letzterer vergrössern die Lichtmenge, die auf die zu beleuchtende Fläche im Bereich der Länge der Lichtquelle fällt.

Spezielle Massnahmen sind angezeigt, wenn mehrere erfindungsgemässe Leuchten ohne weitere Verfeinerung an Notenständern in grösseren Kammermusik-Ensembles oder Orchestern verwendet werden: In solchen Fällen besteht die Gefahr, dass ein Spieler seitlich in die Lichtquelle eines benachbarten Pultes blicken kann und dadurch geblendet wird. Durch weitere Ebenenpaare mit reflektierenden oder hochgradig Licht zurückwerfenden oder mit einem Gradienten versehenen Oberflächen quer zur Achse der Lichtquellen-Anordnung wird dies vermieden.

**Figur 5** zeigt eine Ausführungsform eines erfindungsgemässen Beleuchtungskörper 10 mit einem Reflektor 21 der vor einer Lichtaustrittsöffnung 22 mittels einer Halterung 24 montiert ist, d.h. ausserhalb des durch die beiden Reflektoren 6,7 (vgl. Fig. 1) eingeschlossenen Raums liegt. Der Reflektor 21 ist so ausgebildet, dass Lichtstrahlen 23, die von der Lichtquelle 2 ausgehen, dazu beitragen, dass das zu beleuchtende Objekt optimal ausgeleuchtet wird. Durch die räumliche Gestaltung des externen Reflektors 21, sowie dessen Reflexionseigenschaften wird erreicht, dass Blendwirkungen verhindert und die homogene Ausleuchtung optimiert wird.

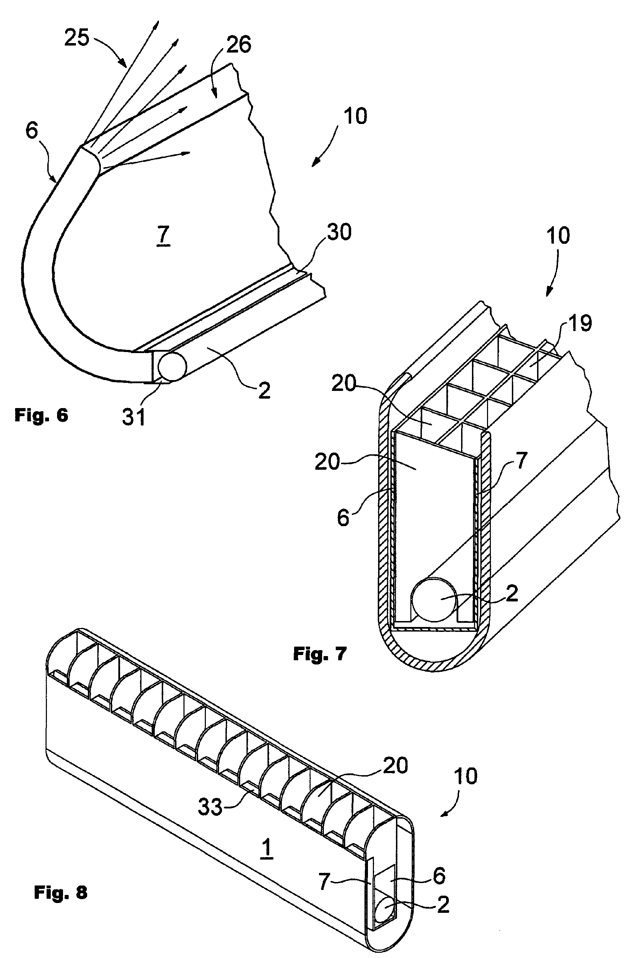

**Figur 6** zeigt eine weitere Ausführungsform eines erfindungsgemässen Beleuchtungskörpers 10. Zu erkennen sind eine Lichtquelle 2, zwei primäre, hier gekrümmte Reflektoren 6,7 und zwei sekundäre Reflektoren 30, 31. Durch die Reflexion an den Reflektoren 6,7 und 30, 31 werden abgestrahlte Lichtstrahlen 32 so beeinflusst, dass sie eine homogenen Ausleuchtung des Zielobjektes (nicht näher dargestellt) garantieren. Eine besonders vorteilhafte Ausführungsform zeichnet sich auch dadurch aus, dass die Reflektoren 6, 7 durch ein durchsichtiges Material, das beidseitig verspiegelt ist, gebildet werden und so Lichtstrahlen 25 von der Lichtquelle 2 zu einer Austrittstelle 26 geführt werden. Eine derartige Anordnung gestattet eine einfache Kombination reflektierender Flächen mit Linsen und bietet mehr Freiheit in der Unterbringung der Lichtquelle 2. Mitentsprechender Gestaltung der Ein- bzw. Austrittslinsen erhöhtsich die gestalterische Vielfaltzum Erreichen guter Lichtverteilungen bei guter Ausbeute der von der Lichtquelle ausgehenden Lichtmenge.

Selbstverständlich kann eine Lichtquelle, die in einer Richtung eine wesentlich grössere Ausdehnung aufweist als in den beiden anderen, auch durch Aneinanderreihung von mehreren bis vielen punktförmigen Lichtquellen gebildet werden. Wegen der Wärmeabgabe wird man in einem solchen Fall weniger an Glühlampen als an Leuchtdioden mit hoher Lichtintensität denken.

**Figur 7** zeigt eine Lösung um das anderweitig seitlich austretende Licht davon abzuhalten, z.B. benachbarte Spieler in einem Orchester zu blenden. In eine Mittelebene der beiden Reflektoren 6 und 7 kommt ein weiterer Reflektor 19 zu liegen. Dieser trägt eine Mehrzahl von senkrecht auf ihm stehenden (z.B. angespritzte, oder als "Reiter" aufgesteckte) Lichtleitmittel 20. Diese können wiederum spiegelnd sein, oder Licht lediglich mehr oder weniger vollständig zurückwerfen oder absorbieren. Jetzt kann auch ein Lichtstrahl, der die Leuchte seitlich, daher mehr oder weniger parallel zur y-Richtung verlassen will, dies analog zu den in Fig, 1 beschriebenen Verhältnissen, nur nach mehreren Reflexionen tun, wodurch er soweit geschwächt wird, dass eine Blendwirkung entfällt. Bei reflektierender Oberfläche nimmt natürlich die Lichtstärke auf dem Zielobjekt zu. Vorzugsweise sind die Reflektoren mit unterschiedlicher Breite ausgebildet und die freien (hier oberen) Kanten der Lichtleitmittel 20 angeschrägt, so dass analog zum anhand von Figur 2 beschriebenen Breitenunterschied der Reflektoren ein geeigneter Lichtaustritt bewirktwird. Es istfür besondereAnwendungen möglich, die durch Reflektoren und Lichtleitmittel gebildeten Teilquerschnitte als Polygon, ellipsen- oder kreisförmig auszubilden und/oder diese in einem Winkel zu den Reflektoren anzuordnen. Wesentlich ist, dass die Proportionen dieser langgestreckten Reflektorkörper, wie in Fig. 7 dargestellt, im Unterschied zu sog. Rasterleuchten gemäss Stand der Technik, so gewählt sind, dass deren Ausdehnung in Z-Richtung (vgl. Fig. 1) im Vergleich zu den Abmessungen der Teilquerschnitte verhältnismässig gross ist, vorzugsweise mindestens die doppelte Länge des grössten Teilquerschnittdurchmessers bzw. der maximalen -diagonale beträgt.

**Figur 8** zeigt einen erfindungsgemässen Beleuchtungskörper 10 mit Lichtleitelementen 20. Im Innern eines offen dargestellten Gehäuses 1 sind Reflektoren 6 und 7 und eine Lichtquelle 2 zu erkennen. Die, aufgrund der gezielten Umlenkung an den Reflektoren 6, 7 in Form von Wärme absorbierten Lichtstrahlen führen zur Erwärmung der Reflektoren 6 und 7. Das Gehäuse 1, sowie die Lichtleitelemente 20 dienen hier als Kühlelemente. Zur Verbesserung der Kühlung weist der Beleuchtungskörper 10 hier Kühlöffnungen 33 auf. Die Lichtleitelemente verhindern u.a., dass Lichtstrahlen (nicht näher dargestellt) unkontrolliert seitlich abgestrahlt werden.

Es ist für den Fachmann leicht ersichtlich, dass die Abstrahlcharakteristik der Lichtquelle ebenfalls gezielt wählbar ist, bspw. durch eine Vielzahl von Leuchtdioden, die das Licht nicht in alle Richtungen gleichmässig abstrahlen. Als Lichtquelle kann somit eine einzige Ouelle (bspw. eine Leuchtstoffröhre) oder mehrere zusammenwirkende Quellen, welche insgesamt die für die Abstrahlcharakteristik benötigte Lichtquelle bilden, zum Einsatz kommen.

Eine weitere bevorzugte Ausführungsform besitzt Reflektoren, welche eine Verspiegelung aufweisen, die in Richtung der z-Achse (vgl. Fig. 1) unterbrochen bzw. mit unterschiedlichem Reflexionskoeffizient beschichtet ist, wobei der reflektierende Anteil mit zunehmender Entfernung von der Lichtquelle zunimmt.

Auch für solche Ausführungsbeispiele gelten in analoger Weise die Dimensionierungsangaben wie vorstehend in Zusammenhang mit Figur 7 beschrieben.

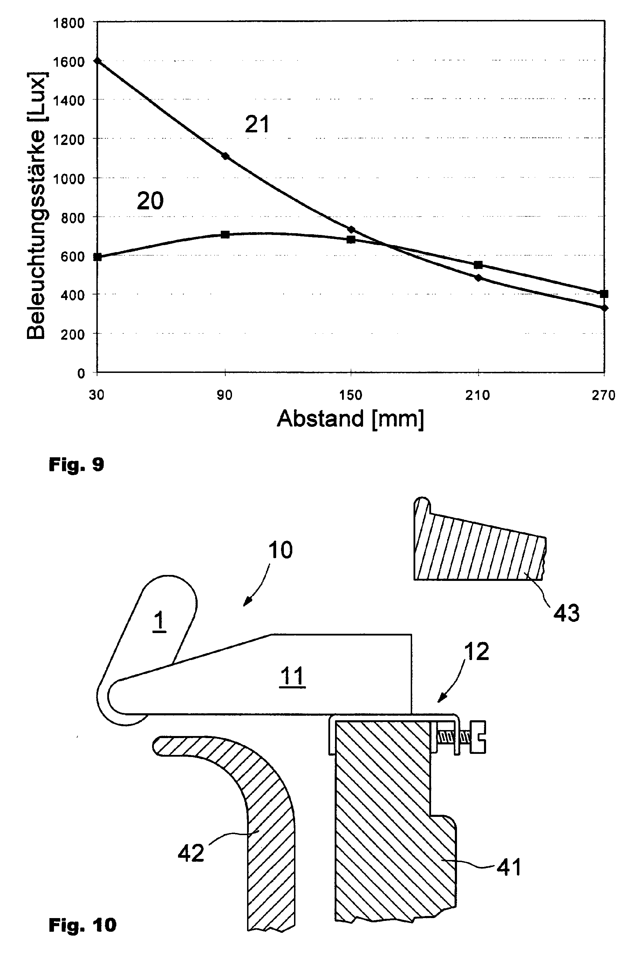

Das in **Figur 9** dargestellte Diagramm zeigt anhand von zwei Kurven zwei typische Verteilungen der Beleuchtungsstärke (Angaben in LUX) auf einem Objekt, wie sie mittels einem erfindungsgemässen Beleuchtungskörper und einer herkömmlichen Leuchtröhre erzielbar sind. Die Anordnung des erfindungsgemässen Beleuchtungskörpers 10 (vgl. Fig. 2) und der Leuchtröhre gegenüber dem zu beleuchtenden Objekt 3 (vgl. Fig. 2) entspricht in etwa der in Figur 2 dargestellten Situation. Die Lichtquellen befinden sich in der beispielhaft gewählten Messanordnung senkrecht in einer Höhe von ca. 180 mm über der kurzen Seite eines auf einer waagrechten Tischfläche liegenden A4-Blattes. Die Achse der Leuchtröhre verläuft im wesentlichen parallel zur kurzen Seite dieses A4-Blattes. Die Mitte der Leuchtröhrenachse liegt über der Mitte der kurzen Seite des A4-Blattes.

Die Beleuchtungsstärke wurde entlang der Mittellinie zwischen den beiden langen Seiten des A4-Blattes gemessen. Eine erste Kurve 20 zeigt einen typischen Verlauf der Beleuchtungsstärke wie er mittels einem erfindungsgemässen Beleuchtungskörper 10 erzielten wird. Im Vergleich hierzu zeigt eine zweite Kurve 21 den entsprechenden Verlauf einer Leuchtröhre ohne erfindungsgemässen Reflektor.

Wird die Leuchtröhre allein, ohne die erfindungsgemässe Lösung verwendet, so fällt die Beleuchtungsstärke mit zunehmender Distanz vom leuchtröhrenseitigen Blattrand rasch und kontinuierlich ab (vgl. zweite Kurve 21). Am entfernten Blattrand beträgt sie weniger als 20% der Beleuchtungsstärke am leuchtröhrenseitigen Blattrand.

Mit der erfindungsgemässen Lösung ergibt sich ein wesentlich günstigerer Verlauf. Die Beleuchtungsstärke (vgl. erste Kurve 20) nimmt anfänglich mitzunehmendem Abstand vom leuchtröhrenseitigen Blattrand um etwa 20% zu und verringert sich dann langsam. Am entfernten Blattrand wird eine Beleuchtungsstärke erreicht, die etwa 66% des Wertes am leuchtröhrenseitigen Blattrand entspricht. Bei sehr ausgeglichener Beleuchtung über das ganze Blatt wird am entferntesten Punkt des Blattes im Vergleich zur blossen Leuchtröhre zudem eine grössere Beleuchtungsstärke erreicht. Da Änderungen der Beleuchtungsstärke um weniger als einen Faktor 2 vom menschlichen Auge praktisch nicht wahrgenommen werden, gewinnt ein Betrachter den Eindruck, dass das Objekt gleichmässig ausgeleuchtet ist. Der dargestellte Verlauf der Beleuchtungsstärke wird durch die Merkmale der Erfindung erzielt, insbesondere dadurch, dass eine Beleuchtungscharakteristik mit Einfach- und Mehrfachreflektion der Lichtstrahlen (vgl. Fig. 2) gezielt bewirkt wird. Mit 400 bis 700 Lux liegt eine sehr gute Helligkeit vor und Blendungen können vermieden werden. Demgegenüber führt die Beleuchtungsstärke von 1600 Lux am leuchtröhrenseitigen Blattrand, welche herkömmlichen Anordnungen entspricht, zu unerwünscht hohen Blendeffekten.

**Figur 10** zeigt eine bevorzugte Halterung für einen erfindungsgemässen Beleuchtungskörper 10 an einem Konzertflügel. Die Tatsache, dass der erfindungsgemässe Beleuchtungskörper 10 typischerweise eine sehr kleine Abmessung aufweist und nur eine geringe Distanz benötigt, um eine Fläche von etwa dem Format A3 gleichmässig auszuleuchten, wird gemäss der Erfindung zusätzlich genutzt, um eine neue, vorteilhafte Montage für den Beleuchtungskörper an Klavieren vorzuschlagen.

Eine vordere Partie eines Konzertflügels ist hier in einer Schnittdarstellung dargestellt. Zu erkennen sind neben dem erfindungsgemässen Beleuchtungskörpers 10, ein oberer Teil 42 eines Klaviaturdeckels und ein vorderer Teil 43 eines Notenpultes. Ein Gehäuse 1 des Beleuchtungskörpers 10 ist hier am freien Ende eines Leuchtenträgers 11 befestigt und in einen Winkelbereich von etwa 20° schwenkbar, um die verschiedenen Positionen und Schrägstellungen von Notenpulten ausgleichen zu können. Ein allfällig erforderliches Steuergerät (nicht näher dargestellt) für die Leuchte 10 wird mit Vorteil im Leuchtenträger 11 integriert. Mittels einer am anderen Ende des Leuchtenträgers befestigten Klemmvorrichtung 12, die das Flügelgehäuse 41 umspannt, ist die Leuchte 10 an einem Gehäuse 41 des Flügels fixiert und dieses von oben umfasst. Die am trägerartig über das Gehäuse 41 vorstehenden Leuchtenträger 11 schwenkbar befestigte Leuchte 10 erlaubt eine optimale Beleuchtung der auf dem Notenpult aufgelegten Noten. Der Leuchtenträger ragt vorzugsweise im wesentlichen horizontal vom Flügelgehäuse 41 vor. Die in Figur 10 gut erkennbaren, einzelnen Teile dieser bevorzugten Ausführungsform werden bevorzugt aus Metall oder Kunststoff gefertigt, sodass sie stabil sind, die Wärme gutleiten und zu keinen Kratzspuren, insbesondere im Bereich der Befestigung führen. Die Klemmvorrichtung ist mit minimaler Bauhöhe ausgebildet und vermeidet dadurch Behinderungen des unteren Blattrandes.

Die Beleuchtung der Noten von unten her hat die Vorteile, dass die Leuchte nicht beim Umblättern übergrosser Formate von Notenblättern stört und dass an der Papieroberfläche reflektiertes Licht nicht ins Gesichtsfeld des Pianisten gerät, was zu zu einer Kontrastverminderung und entsprechend zu einer Verschlechterung der Lesbarkeit der Noten führen würde.

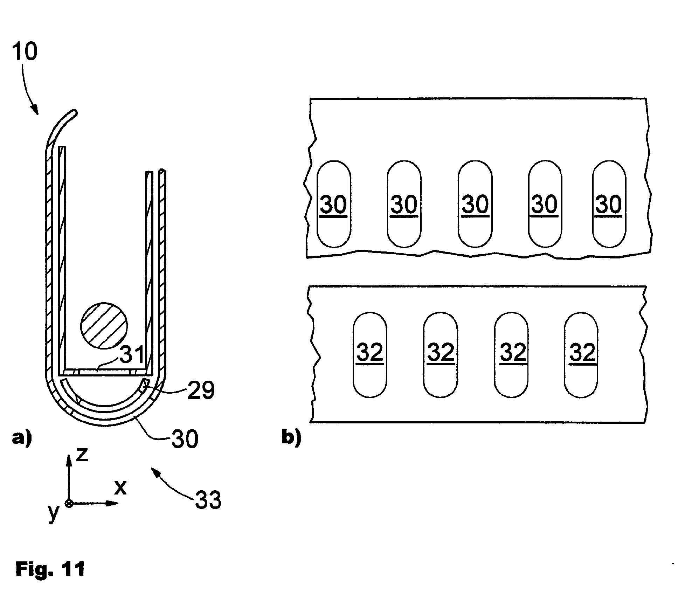

**Figur 11** a) zeigt eine weitere Ausführungsform der Erfindung, die insbesondere bei der Anwendung zur Beleuchtung von Notenblättern an Flügeln und Orgeln von Interesse ist. Mittels Öffnungen 30, 31 die sich im unteren Bereich eines Gehäuses 1 und eines Reflektors befinden, tritt Licht aus dem rückwärtigen Bereich 33 des Beleuchtungskörpers 10 aus. Dieses Licht kann zur Beleuchtung von weiteren Gegenständen oder Objekten, beispielsweise einer Klaviatur verwendet werden. Durch ein hier in y-Richtung verschiebbar angeordnetes Element 29 können die Öffnungen 30 einfach und lichtdicht verschlossen oder geöffnet werden. Das Mass der austretenden Strahlung ist dadurch einfach und stufenlos einstellbar.

Eine bevorzugte Ausführung der Öffnungen ist in Figur 11 b) im Detail dargestellt. Zu erkennen istein Teil einer Abwicklung des rückwärtigen Bereichs 33 des Gehäuses 1 und des verschiebbar angeordneten Elementes 29. Der Abstand zwischen von hier schlitzförmigen Öffnungen 32 im verschiebbaren Element 29 als auch der Öffnungen 30 im Gehäuse list bei identischer Teilung etwas grösser gewählt als die Breite der Schlitze. Dank diesem Umstand lässt sich die Intensität der im rückwärtigen Bereich austretenden Beleuchtung stufenlos verstellen.

## Patentansprüche

1. Beleuchtungskörper zur überwiegend indirekten Beleuchtung eines Objektes (3) mit mindestens einer Lichtquelle (2) und mindestens zwei Reflektoren (6, 7, 11, 18, 19, 21) **dadurch gekennzeichnet, dass** die Reflektoren (6,7,11,18,19,21) und die Lichtquelle (2) so zueinander angeordnet sind, **dass** mindestens annähernd alle austretenden Lichtstrahlen (8,9,10,11,23) an mindestens einem der Reflektoren (6,7,11,18,19, 21) reflektiert werden, bevor sie auf das Objekt (3) treffen.

2. Beleuchtungskörper gemäss Anspruch 1, **dadurch gekennzeichnet, dass** nahe beim Beleuchtungskörper austretende Lichtstrahlen (8) durch die Reflektoren (6, 7,11,18,19, 21) im wesentlichen eine Mehrfachreflexion und vom Beleuchtungskörper entfernte Bereiche beleuchtende Lichtstrahlen (9) im wesentlichen eine einfache Reflexion erfahren.

3. Beleuchtungskörper gemäss Anspruch 1 oder 2, **dadurch gekennzeichnet, dass** mindestens zwei langgestreckte, zumindest bereichsweise eben ausgestaltete Reflektoren (6,7,11,18,19,21) im wesentlichen parallel zueinander angeordnet sind und die Lichtquelle (2) eine langgesteckte Abstrahlcharakteristik aufweist,wobei die Lichtquelle (2) zwischen den Reflektoren an deren einen Breitseite angeordnet ist und die Lichtaustrittsöffnung an deren anderen langgestreckten Seite liegt.

4. Beleuchtungskörper nach einem der Ansprüche 1 bis 3, **dadurch gekennzeichnet, dass** die Reflektoren (6, 7, 11, 18, 19, 21) eine unterschiedliche Breite (B1, B2) aufweisen.

5. Beleuchtungskörper gemäss einem der vorstehenden Ansprüche **dadurch gekennzeichnet, dass** mindestens einer der Reflektoren (6,7,11,18,19,21) zumindest bereichsweise einen Reflexionskoeffizient zwischen 0.2 und 0.8 aufweist und/oder die Reflektoren bereichsweise unterschiedliche Reflexionseigenschaften aufweisen.

6. Beleuchtungskörper gemäss einem der vorstehenden Ansprüche **dadurch gekennzeichnet, dass** ein Raum (12) zwischen den Reflektoren (6, 7, 11, 18, 19, 21) zumindest bereichsweise mit einem lichttransparenten Material ausgefüllt ist.

7. Beleuchtungskörper gemäss einem der vorstehenden Ansprüche **dadurch gekennzeichnet, dass** mindestens eine als Reflektor oder als Blende ausgebildete Fläche (18, 21) zwischen den Reflektoren (6,7,11,18,19,21) und/oder vor der Lichtaustrittsöffnung angeordnet ist.

8. Beleuchtungskörper gemäss einem der vorstehenden Ansprüche **dadurch gekennzeichnet, dass** mindestens ein langgestrecktes Lichtleitmittel (20) quer oder in einem Winkel zu den Reflektoren (6,7,11,18,19, 21) angeordnet ist.

9. Beleuchtungskörper gemäss einem der vorstehenden Ansprüche **dadurch gekennzeichnet, dass** der Beleuchtungskörper (10) mindestens eine Öffnung (30, 31, 32) in einem rückwärtigen Bereich (33) aufweist, derart **dass** das austretende Licht zur Beleuchtung eines Objektes verwendbar ist, wobei diese Öffnung (30, 31, 32) mittels einem Element (29) zeitweise lichtdicht verschliessbar ist.

10. Beleuchtungskörper gemäss einem der vorstehenden Ansprüche, **gekennzeichnet durch** einen mit diesem gelenkartig verbundenen, trägerartigen Leuchtenträger (11), an dessen freien Ende eine Klemmvorrichtung (12), zur Befestigung des Beleuchtungskörpers (10) an einem Klavier (41), angeordnet ist, wobei die Klemmvorrichtung eine geringe Bauhöhe aufweist und ein Klaviergehäuse (41) von oben umfasst.
